# EUROPEAN PATENT APPLICATION

(11) **EP 4 440 100 A1**
(43) Date of publication of application: **02.10.2024**
(21) Application number: 22898315.1
(22) Date of filing: 27.10.2022
(51) Int. Cl.: H04N 7/14, H04M 11/00

(54) **INFORMATION PROCESSING DEVICE, INFORMATION PROCESSING METHOD, AND INFORMATION PROCESSING PROGRAM**

(30) Priority: 25.11.2021 JP 2021191014
(71) Applicant: Sony Group Corporation, Tokyo 108-0075 (JP)
(72) Inventor: KAWANA, Yousuke, Tokyo 108-0075 (JP); OZAKI, Honoka, Tokyo 108-0075 (JP); YASUDA, Mari, Tokyo 108-0075 (JP); IMOTO, Maki, Tokyo 108-0075 (JP)
(74) Representative: D Young & Co LLP
(86) International application number: PCT/JP2022/040089
(87) International publication number: WO 2023/095531

(57) **Abstract**

The present disclosure proposes an information processing device, an information processing method, and an information processing program capable of controlling a disclosure level of information regarding vision, sound, and operation from the standpoint of a listener and a speaker. While a first user and a second user are having a conversation online, a telepresence device 50 acquires first sensing information of a first user acquired using a sensing device and second sensing information of a second user acquired using a sensing device. The telepresence device 50 specifies a disclosure level of information to be transmitted and received between the first user and the second user based on the situation of the first user and the situation of the second user corresponding to the first sensing information and the second sensing information, respectively.

## Description

### Field

The present disclosure relates to an information processing device, an information processing method, and an information processing program.

### Background

There is a telepresence system as a communication tool that enables users in different locations to enjoy a feeling as if they were interacting face to face.

In use of the telepresence system, with a conversation held between a speaker and a listener without using a camera function, the situation of the partner is unknown, making it difficult to perform comfortable communication. On the other hand, with a conversation performed using a camera function, there is a case of giving a sense of being monitored by the camera even with an advantage that facial expressions or gestures of the partner is known.

To handle the above problem, Patent Literature 1 proposes a technology of supporting a conversation by appropriately adding, during telepresence, an effect to text information regarding an utterance of a user being a speaker in accordance with voice, facial expressions, and the motion of the user. Patent Literature 2 proposes a technique of modifying a vision or a sound as necessary and presenting the modified vision or the sound to each user in a case where it is determined that presenting the original vision or sound of the speaker as it is to the other user is not desirable.

### Citation List

### Patent Literature

Patent Literature 1: JP 2021-71632 A
Patent Literature 2: JP 2021-21025 A

### Summary

### Technical Problem

The above-described known technologies control the details and presentation based on the state and the speech during communication on the speaker alone and have not sufficiently considered the situation of the listener, having room for improvement.

In view of this, the present disclosure proposes an information processing device, an information processing method, and an information processing program capable of controlling a disclosure level of information regarding vision, sound, and operation from the standpoint of the listener and the speaker.

### Solution to Problem

In order to solve the above problems, an information processing device according to an embodiment of the present disclosure includes an acquisition unit that acquires first sensing information of a first user acquired by using a sensing device and second sensing information of a second user acquired by using a sensing device while the first user and the second user are performing conversation online and an information processing unit that specifies a disclosure level of information to be transmitted and received between the first user and the second user based on a situation of the first user and a situation of the second user corresponding to the first sensing information and the second sensing information, respectively.

### Brief Description of Drawings

FIG. 1 is a diagram illustrating a configuration of a telepresence system according to the present embodiment.
FIG. 2 is a diagram illustrating non-verbal information.
FIG. 3 is a view illustrating a setting example of a disclosure level of non-verbal information.
FIG. 4 is a diagram illustrating a configuration example of a telepresence device according to the present embodiment.
FIG. 5 is a diagram (1) illustrating a method of specifying a disclosure level of non-verbal information.
FIG. 6 is a diagram (2) illustrating a method of specifying the disclosure level of non-verbal information.
FIG. 7 is a flowchart illustrating a processing procedure of a telepresence device 50 according to the present embodiment.
FIG. 8 is a diagram illustrating an example of control of a disclosure level.
FIG. 9 is a diagram illustrating a configuration example of a server 100.
FIG. 10 is a hardware configuration diagram illustrating an example of a computer that implements functions of a server and a telepresence device. Description of Embodiments

Hereinafter, exemplary embodiments of an information processing device, an information processing method, and an information processing program disclosed in the present application will be described in detail with reference to the drawings. Note that the present invention is not limited by the exemplary embodiments.

The present disclosure will be described in the following order.
1. Embodiments
   1-1. Configuration of telepresence system according to embodiment
   1-2. Definition of non-verbal information
   1-3. Definition of disclosure level of non-verbal information
   1-4. Configuration of telepresence device according to embodiment
   1-5. Specifying disclosure level
      1-5-1. Processing of detecting situation of speaker
      1-5-1-1. Details of communication
      1-5-1-2. Change in external environment
      1-5-1-3. State of person
      1-5-1-4. Relationship between speaker and listener
      1-5-2. Processing of detecting situation of listener
      1-5-2-1. External environmental factors
      1-5-2-2. Internal state of person
      1-5-2-3. Behavioral state of person
      1-5-2-4. Emotional expression
      1-6. Processing procedure of telepresence device according to embodiment
      1-7. Example of control of disclosure level of non-verbal information
      1-8. Effects of embodiments
2. Other embodiments
3. Hardware configuration
4. Conclusion

### [1. Embodiments]

### [1-1. Configuration of telepresence system according to embodiment]

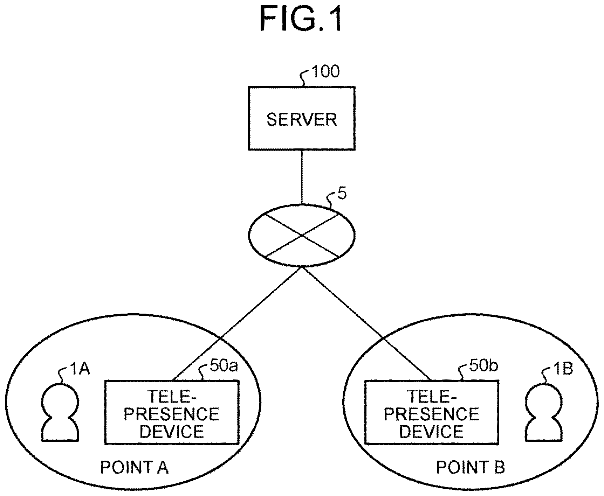

First, an example of a telepresence system according to the present embodiment will be described with reference to FIG. 1. FIG. 1 is a diagram illustrating a configuration of a telepresence system according to the embodiment. As illustrated in FIG. 1, the presence system includes telepresence devices 50a and 50b and a server 100. The telepresence devices 50a and 50b and the server 100 are connected to each other via a network 5.

The telepresence device 50a is operated by a user 1A at point A. The telepresence device 50b is operated by a user 1B at point B. In the following description, the telepresence devices 50a and 50b are referred to as telepresence devices 50 unless particular distinction is needed. The users 1A and 1B perform an online meeting or the like using the telepresence device 50.

In the telepresence system according to the present embodiment, information such as vision, sound, and operation is transmitted and received between the telepresence device 50a and the telepresence device 50b in real time (bidirectional communication is performed). In this manner, the telepresence system exchanges information in real time so as to allow the user 1A and the user 1B to enjoy a feeling as if they are interacting with each other face to face, thereby providing an interactive environment.

Although the present embodiment assumes bidirectional communication between two points, which are point A and point B, it is also possible to perform bidirectional communication at three or more points including a plurality of other points.

The server 100 is a device that records log information related to information exchanged between the telepresence devices 50 while the user 1A and the user 1B are performing an online meeting or the like. The server 100 notifies the telepresence device 50 of the log information.

Furthermore, the server 100 manages characteristic information of the user. The characteristic information includes information such as name, gender, age, and personal relationships of the user. The server 100 notifies the telepresence device 50 of the characteristic information.

### [1-2. Definition of non-verbal information]

When communication with the partner is performed using the telepresence system illustrated in FIG. 1, information is exchanged by presenting and sharing content or using a voice conversation. At this time, information obtained as a clue other than content or language is defined as "non-verbal information" in the present embodiment.

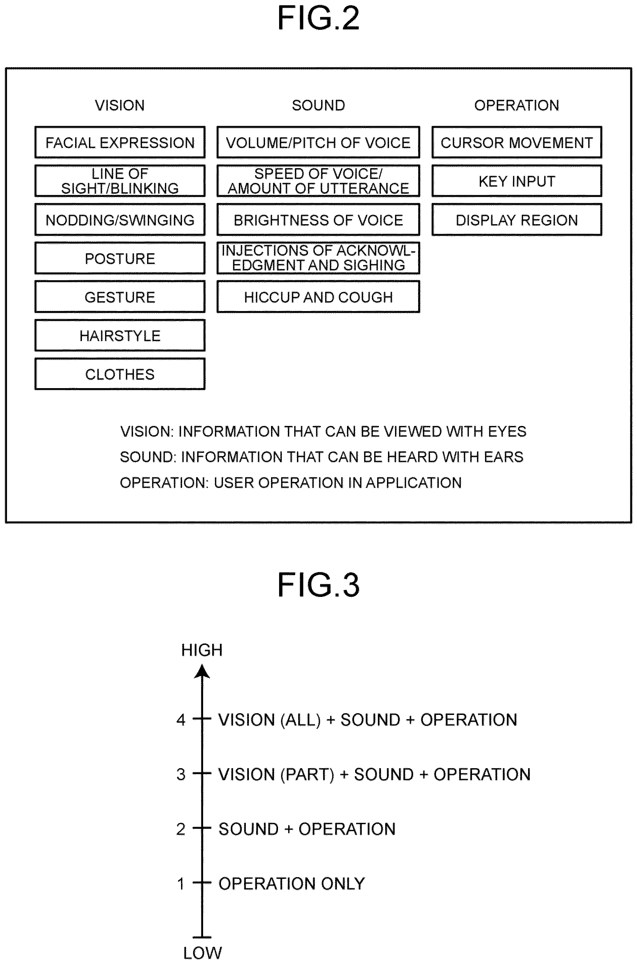

FIG. 2 is a diagram illustrating non-verbal information. As illustrated in FIG. 2, non-verbal information is classified into three types of information: vision, sound, and operation. The vision is information that can be viewed with eyes. For example, the vision includes information indication facial expressions, a line of sight/blinking, nodding/swinging, a posture, a gesture, a hairstyle, and clothes of the user. The sound is information that can be heard with the ears. The sound includes information of volume/pitch, speed/amount of utterance, and brightness of user's voice, as well as interjections of acknowledgment, sighing, hiccup, and cough. The operation is information regarding the operation of the user in the application software. The operation includes cursor movement, key input, and display region information.

During communication between the user 1A and the user 1B, the telepresence device 50 can control the camera function and the microphone function to adjust a type and an amount of non-verbal information to be exchanged with the partner. In the present embodiment, the disclosure level of the non-verbal information is set in a plurality of stages.

### [1-3. Definition of disclosure level of non-verbal information]

FIG. 3 is a diagram illustrating a setting example of a disclosure level of non-verbal information. In principle, the more each item of vision, sound, and operation is disclosed, the higher the disclosure level of the non-verbal information. In the present embodiment, the importance of each item of vision, sound, and operation is set to the order of vision > sound > operation from the magnitude of the information amount, so as to correspond to the disclosure level. Furthermore, the levels can be classified by disclosing only some items in the vision.

In the example illustrated in FIG. 3, the level value, that is a value of the disclosure level is set to any of levels 1 to 4. The higher the level value, the more types and amounts of non-verbal information are disclosed to the partner. At disclosure level 4, a vision (all), a sound, and an operation are disclosed to the partner. At a disclosure level 3, a vision (part), a sound, and an operation are disclosed to the partner. In the disclosure level 2, a sound and an operation are disclosed to the partner. In the disclosure level 1, only the operation is disclosed to the partner.

The present embodiment will describe a case where the telepresence device 50 specifies the disclosure level of the non-verbal information and transmits the non-verbal information according to the disclosure level to the telepresence device 50 on the partner side. However, the server 100 may be configured to specify the disclosure level, instead of the telepresence device 50.

### [1-4. Configuration of telepresence device according to embodiment]

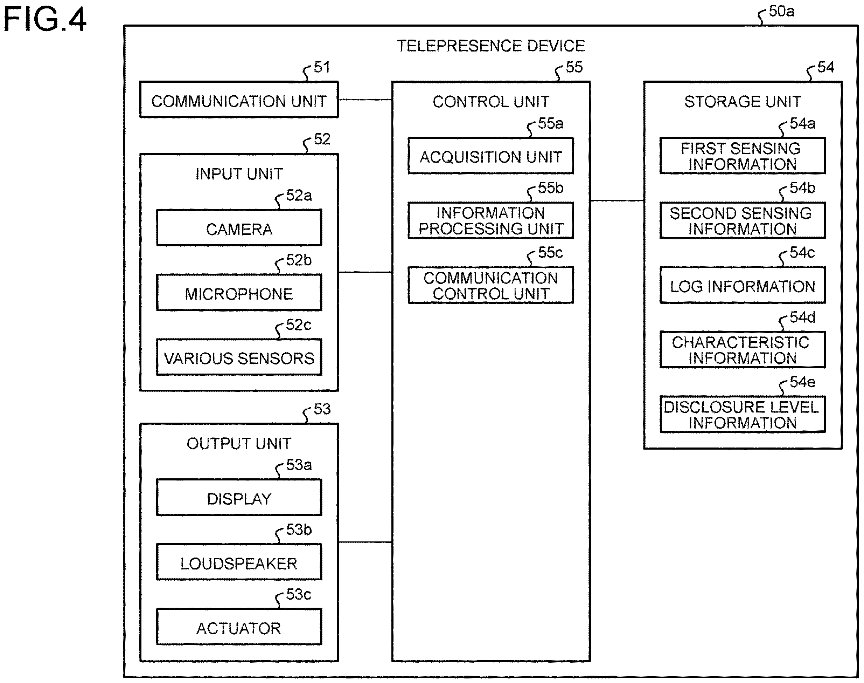

Next, a configuration of the telepresence device 50 illustrated in FIG. 1 will be described. FIG. 4 is a diagram illustrating a configuration example of the telepresence device 50 according to the present embodiment. Here, a description will be given using the telepresence device 50a. As illustrated in FIG. 4, the telepresence device 50a includes a communication unit 51, an input unit 52, an output unit 53, a storage unit 54, and a control unit 55.

The communication unit 51 is actualized by a network interface card (NIC), for example. The communication unit 51 is connected to the network 5 in a wired or wireless channel, and transmits and receives information to and from the server 100 and the telepresence device 50b via the network 5.

The input unit 52 includes a camera 52a, a microphone 52b, and various sensors 52c. The camera 52a is a device for capturing a vision. The microphone 52b is a device that collects sound. Although not illustrated, the input unit 52 may include an input device such as a keyboard and a mouse.

The various sensors 52c include a biometric sensor that measures biometric information, an external environment sensor that measures external environment information, and the like. The biometric information corresponds to information such as a body temperature, perspiration, a blood pressure, and a heart rate of the user. The external environment information corresponds to information such as an environment around the telepresence device 50a (such as air temperature, temperature, humidity).

The camera 52a, the microphone 52b, and the various sensors 52c may each be provided in plurality, not limited to one for each. In addition, the camera 52a, the microphone 52b, and the various sensors 52c are not necessarily to be integrated with the telepresence device 50a, and may each be a portable wearable device.

The output unit 53 includes a display 53a, a loudspeaker 53b, and an actuator 53c. The display 53a is a device that displays an image. The loudspeaker 53b is a device that outputs sound. The actuator 53c is a device that generates vibration, heat, smell, wind, and the like.

The display 53a, the loudspeaker 53b, and the actuator 53c may each be provided in plurality, not limited to one each.

The storage unit 54 is implemented by semiconductor memory elements such as random access memory (RAM) and flash memory, or other storage devices such as a hard disk or an optical disc, for example. The storage unit 54 includes first sensing information 54a, second sensing information 54b, log information 54c, characteristic information 54d, and disclosure level information 54e.

The first sensing information 54a corresponds to image information captured by the camera 52a on the telepresence device 50a side, sound information collected by the microphone 52b on the telepresence device 50a side, biometric information measured by the various sensors 52c on the telepresence device 50a side, and external environment information.

The second sensing information 54b corresponds to image information captured by the camera on the telepresence device 50b side, sound information collected by the microphone on the telepresence device 50b side, biometric information measured by various sensors on the telepresence device 50b side, and external environment information.

The log information 54c includes information transmitted and received in the past between the telepresence devices 50a and 50b (or with another telepresence device). The information transmitted and received in the past may be the non-verbal information described in FIG. 2, or may be other information such as a usage situation, meeting minutes, or chat history. The log information 54c is notified from the server 100.

The characteristic information 54d includes information such as name, gender, age, and personal relationships of the user. The characteristic information 54d is notified from the server 100.

The disclosure level information 54e is information regarding a disclosure level installed by an information processing unit 55b of the control unit 55 described below.

The control unit 55 is implemented by execution of programs stored inside the telepresence device 50 by a central processing unit (CPU), a micro processing unit (MPU), or the like, using random access memory (RAM) or the like, as a working area. The control unit 55 may be implemented by an integrated circuit such as an application specific integrated circuit (ASIC) or a field programmable gate array (FPGA). The control unit 55 includes an acquisition unit 55a, an information processing unit 55b, and a communication control unit 55c.

During non-face-to-face communication, the acquisition unit 55a acquires image information from the camera 52a and registers the acquired information in the first sensing information 54a. The acquisition unit 55a acquires sound information from the microphone 52b and registers the acquired information in the first sensing information 54a. The acquisition unit 55a acquires biometric information and external environment information from the various sensors 52c, and registers the acquired information in the first sensing information 54a.

During non-face-to-face communication, the acquisition unit 55a acquires the second sensing information 54b from the telepresence device 50b and registers the acquired information in the storage unit 54.

The acquisition unit 55a acquires the log information 54c and the characteristic information 54d from the server 100. The acquisition unit 55a registers log information 54c and characteristic information 54d in the storage unit 54.

The information processing unit 55b specifies a disclosure level in the case of notifying non-verbal information from the "speaker" to the "listener" based on the first sensing information 54a, the second sensing information 54b, the log information 54c, and the characteristic information 54d. The information processing unit 55b registers the information of the specified disclosure level in a storage unit 140 as the disclosure level information 54e.

The information processing unit 55b repeatedly executes processing of specifying the disclosure level every predetermined period, and updates the disclosure level information 54e every time the disclosure level is specified. In the following description, the user 1A at point A is referred to as a "speaker", and the user 1B at point B is referred to as a "listener". The information processing unit 55b sets an initial value of the disclosure level in the disclosure level information 54e.

The communication control unit 55c controls the type and amount of non-verbal information transmitted from the telepresence device 50a to the telepresence device 50b in accordance with the disclosure level set in the disclosure level information 54e.

When the disclosure level is "4", the communication control unit 55c transmits non-verbal information regarding the vision (all), the sound, and the operation, which have been input from the input unit 52, to the telepresence device 50b.

When the disclosure level is "3", the communication control unit 55c transmits the non-verbal information of the vision (part), the sound, and the operation, which have been input from the input unit 52, to the telepresence device 50b. For example, the vision (part) transmits only the vision of the face region, as a part of the vision of the user 1A captured by the camera 52a, to the telepresence device 50b. What specific vision is to be transmitted to the telepresence device 50b as the vision (part) is set in advance.

In a case where the disclosure level is "2", the communication control unit 55c transmits non-verbal information regarding the sound and the operation, which have been input from the input unit 52, to the telepresence device 50b.

In a case where the disclosure level is "1", the communication control unit 55c transmits non-verbal information regarding the operation input from the input unit 52 to the telepresence device 50b.

Incidentally, in a case where the non-verbal information has been received from the telepresence device 50b, the communication control unit 55c controls the output unit 53 to output the received non-verbal information. The non-verbal information transmitted from the telepresence device 50b is non-verbal information having its type and amount controlled based on the disclosure level specified on the telepresence device 50b side.

### [1-5. Specifying disclosure level]

The information processing unit 55b of the telepresence device 50a described in FIG. 4 specifies the situation of the speaker based on the first sensing information 54a, and detects the situation of the listener based on the second sensing information 54b.

For example, the situation of the speaker corresponds to "whether or not the speaker wants to know non-verbal information of the listener (partner)". The situation of the listener corresponds to "whether or not the listener wants to convey their non-verbal information to the speaker (partner)". The information processing unit 55b specifies the disclosure level based on the detected result.

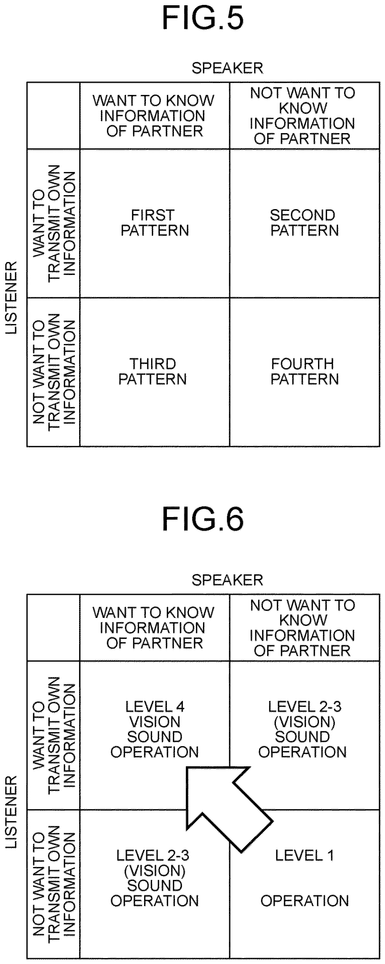

FIGS. 5 and 6 are diagrams illustrating a method of specifying a disclosure level of non-verbal information. First, FIG. 5 will be described. As illustrated in FIG. 5, communication situations are classified into four patterns according to situations of the speaker and the listener.

For example, in a case where the speaker "wants to know partner's information" and the listener "wants to convey their information", the case corresponds to a "first pattern". In a case where the speaker "does not want to know the partner's information" and the listener" wants to convey their information", the case corresponds to a "second pattern".

In a case where the speaker "wants to know the partner's information" and the listener "does not want to convey their information", the case corresponds to a "third pattern". In a case where the speaker "does not want to know the partner's information" and the listener "does not want to convey their information", the case corresponds to a "fourth pattern".

FIG. 6 illustrates a result of mapping performed on each pattern illustrated in FIG. 5 so that the level value of the disclosure level of the non-verbal information becomes larger toward the upper left. That is, the case where the communication situation is the first pattern corresponds to the disclosure level "4". The case where the communication situation is the second pattern or the third pattern corresponds to the disclosure level "2-3". The case where the communication situation is the fourth pattern corresponds to the disclosure level "1".

The above description defines the case where the communication situation is the second pattern or the third pattern as the disclosure level "2-3 (may be either 2 or 3)". However, the following description will define the disclosure level corresponding to the second and third patterns as the disclosure level "2". The disclosure level set for the second and third patterns may be appropriately changed on condition that the disclosure level set for the second and third patterns is larger than the disclosure level of the fourth pattern and smaller than the disclosure level of the first pattern.

### [1-5-1. Processing of detecting situation of speaker]

The following will describe an example of processing of detecting the situation of the speaker (whether or not the speaker wants to know the non-verbal information of the listener (partner)) executed by the information processing unit 55b. The information processing unit 55b executes the following processing based on the first sensing information 54a, the second sensing information 54b, the log information 54c, and the characteristic information 54d. Among various detection methods described below, the information processing unit 55b may use any one of the detection methods or may use a plurality of detection methods in combination. The information processing unit 55b executes a plurality of detection methods. In a case where determination results do not match, the situation of the speaker is to be determined by weighted majority decision or the like.

### [1-5-1-1. Details of communication]

During the non-face-to-face communication, in a case where no reaction is returned from the listener or no response is made even when the speaker makes a question or a suggestion during the speech for a certain period of time or more, the speaker would be anxious about whether the listener is listening to their speech, and wants to know non-verbal information of the listener.

For example, the information processing unit 55b performs sound analysis on the sound information of the first sensing information 54a, and determines whether or not the speaker makes a question or a proposal. In addition, it is assumed that information such as a start time and an end time of an utterance regarding the speaker and the listener is registered in the log information 54c by a time stamp function of the server 100.

In a case where there is no utterance from the listener for a predetermined time or more from the time when the speaker makes a question or a proposal, the information processing unit 55b determines that the speaker is in the situation of "wanting to know the non-verbal state of the listener". In contrast, in a case where there is an utterance from the listener within a predetermined time from the time when the speaker makes a question or a proposal, the information processing unit 55b determines that the speaker is in the situation of "not wanting to know the non-verbal state of the listener".

The information processing unit 55b may analyze the image information of the first sensing information 54a, and may determine that the speaker is in the situation of "wanting to know the non-verbal state of the listener" in a case where the speaker has a predetermined facial expression (annoyed facial expression) or in a case where the speaker has a predetermined gesture (waving) or the like.

### [1-5-1-2. Change in external environment]

During the non-face-to-face communication, in a case where a sound of a predetermined external environment, such as a sound of a television, a baby's crying, a construction sound, or a rain sound, is heard from the listener side, the speaker wants to know non-verbal information including the surrounding environment of the listener side.

For example, the information processing unit 55b performs sound analysis on the sound information of the second sensing information 54b, and determines whether or not a sound of a predetermined external environment is included. In a case where the sound information of the second sensing information 54b includes a sound of a predetermined external environment, the information processing unit 55b determines that the speaker is in the situation of "wanting to know the non-verbal state of the listener". In contrast, in a case where the sound information of the second sensing information 54b does not include a sound of a predetermined external environment, the information processing unit 55b determines that the speaker is in the situation of "not wanting to know the non-verbal state of the listener".

The information processing unit 55b may analyze image information of the first sensing information 54a, further determine whether the speaker has a predetermined facial expression (annoyed facial expression), and determine the situation of the speaker.

### [1-5-1-3. State of person]

When a speaker hears a sound or voice that is generally uncomfortable to be heard, such as a cough, a clicking tongue, or a sighing, or when the facial expression of the partner seems sleepy or bored during the non-face-to-face communication, the speaker wants to know non-verbal information including the mental state of the listener.

For example, the information processing unit 55b performs sound analysis on the sound information of the second sensing information 54b, and determines whether or not predetermined uncomfortable sound or voice (cough, tongue clicking, sigh) are included in the information. In a case where the sound information of the second sensing information 54b includes a predetermined uncomfortable sound, the information processing unit 55b determines that the speaker is in the situation of "wanting to know the non-verbal state of the listener". In contrast, in a case where the sound information of the second sensing information 54b does not include a predetermined uncomfortable sound, the information processing unit 55b determines that the speaker is in the situation of "not wanting to know the non-verbal state of the listener".

The information processing unit 55b may analyze the image information of the second sensing information 54b, further determine whether the listener has a predetermined facial expression (sleepy face, bored face), and determine the situation of the speaker. Alternatively, the information processing unit 55b may determine, based on biometric information of the first sensing information 54a, whether or not the characteristic of the change in pulse and body temperature is a characteristic indicating the sleepiness and boredom of the listener, and determine the situation of the speaker.

### [1-5-1-4. Relationship between speaker and listener]

In a case where the speaker and the listener meet each other for the first time, they desire to have non-verbal information in order to know what kind of person the partner is. In contrast, in a case where they have had communication many times in the past so as to be able to have sufficient knowledge of each other, or in a case of having a bad feeling such as antipathy, they do not want to have non-verbal information of the partner.

The information processing unit 55b counts the frequency of past communication between the speaker and the listener based on the log information 54c, and determines that the speaker is in the situation of "wanting to know the non-verbal state of the listener" in a case where the frequency of the communication is less than a predetermined frequency. On the other hand, in a case where the number of times of communication is less than the predetermined number of times, the information processing unit 55b determines that the speaker is in the situation of "not wanting to know the non-verbal state of the listener".

The information processing unit 55b may refer to the personal relationship between the speaker and the listener based on the characteristic information 54d. In a case where the personal relationship is not good, the information processing unit 55b may determine that the speaker is in the situation of "not wanting to know the non-verbal state of the listener" regardless of the determination result of the log information 54c.

### [1-5-2. Processing of detecting situation of listener]

The following will describe an example of processing of detecting a situation of the listener (whether or not the listener wants to convey their non-verbal information to the speaker (partner)) executed by the information processing unit 55b. The information processing unit 55b executes the following processing based on the first sensing information 54a, the second sensing information 54b, the log information 54c, and the characteristic information 54d. Among various detection methods described below, the information processing unit 55b may use any one of the detection methods or may use a plurality of detection methods in combination. The information processing unit 55b executes a plurality of detection methods. In a case where determination results do not match, the situation of the listener is to be determined by weighted majority decision or the like.

The present embodiment will describe a case where the information processing unit 55b of the telepresence device 50a on the speaker side detects the situation of the listener. However, the telepresence device 50b on the listener side may be configured to detect the situation of the listener based on sensing information possessed by the telepresence device 50b and notify the information processing unit 55b of the situation.

### [1-5-2-1. External environmental factors]

It is conceivable that the listener needs to temporarily leave the place (the telepresence device 50 or the point) during communication even though the speaker is talking. For example, an event such as a delivery service, a telephone call, or rain may occur while a listener is having a communication at their seat at home using the telepresence system. In this case, the listener needs to handle the event. However, disclosing non-verbal information (vision) to the speaker by the listener might lead to a possibility to offend the listener or interrupt the speech. To avoid this, the listener does not want to convey their non-verbal information when a predetermined event occurs.

For example, the information processing unit 55b analyzes image information and sound information of the second sensing information 54b, and determines whether or not a predetermined event has occurred. In a case where the listener disappears from the image information, or in a case where sound information includes a sound of an intercom, telephone ringing, or rain, the information processing unit 55b determines that a predetermined event has occurred.

In a case where the predetermined event has occurred, the information processing unit 55b determines that the listener is in the situation of "not wanting to convey their non-verbal information to the speaker". In contrast, in a case where the predetermined event has not occurred, the information processing unit 55b determines that the listener is in the situation of "wanting to convey their non-verbal information to the speaker".

### [1-5-2-2. Internal state of person]

When the listener is in a state attributed to their appearance or health condition, such as having a sleepy face, having a terrible bead head, in a poor physical condition, before shaving, before doing makeup, or the like, the listener does not want to convey their non-verbal information to the partner (speaker) from the sense of avoiding impoliteness to the partner. Alternatively, in a case where the listener is not interested in the speech of the speaker in the first place, the listener does not want to convey their non-verbal information to the partner since the listener does not let the partner know the attitude of being uninterested.

For example, the information processing unit 55b executes facial expression analysis on the image information of the second sensing information 54b, and determines whether or not the internal state of the listener corresponds to a predetermined state (having a sleepy face, having a terrible bead head, in poor physical condition, before shaving, before doing makeup). The information processing unit 55b may determine whether or not the internal state of the listener is a predetermined state by using biometric information (information related to body temperature and heart rate) of the second sensing information 54b.

In a case where the internal state of the listener is the predetermined state, the information processing unit 55b determines that the listener is in a situation of "not wanting to convey their non-verbal information to the speaker". In contrast, in a case where the internal state of the listener is not the predetermined state, the information processing unit 55b determines that the listener is in a situation of "wanting to convey their non-verbal information to the speaker".

### [1-5-2-3. Behavioral state of person]

During non-face-to-face communication, the listener sometimes communicates with the speaker while doing something else. In a case where the listener is doing something else (Internet surfing, smartphone game, child care, etc.) during communication, the listener does not want the partner to see the situation and does not want to convey their non-verbal information to the partner.

For example, the information processing unit 55b performs state analysis on the second sensing information 54b. In a case where the listener is performing a predetermined action (Internet surfing, smartphone game, or child care), the information processing unit 55b determines that the listener is in the situation of "not wanting to convey their non-verbal information to the speaker". In contrast, in a case where the listener is determined to be not performing the predetermined action in the state analysis on the second sensing information 54b by the information processing unit 55b, the information processing unit 55b determines that the listener is in the situation of "wanting to convey their non-verbal information to the speaker".

### [1-5-2-4. Emotional expression]

During non-face-to-face communication, there is a case where the listener wants to demonstrate that they are attentively listening to the speaker, the listener has a question, or wants to convey emotional expressions such as gratitude to the partner. In these cases, the listener wants to convey their non-verbal information to the partner.

The information processing unit 55b analyzes the image information of the second sensing information 54b, and determines whether or not the listener is attentively listening to the speech based on the direction of the face and the retention state of the line of sight of the listener. In a case where the direction of the face or the position of the line of sight is in a certain direction for a predetermined time, the information processing unit 55b determines that the listener is listening attentively.

The information processing unit 55b executes language analysis by a sound analysis technology on the sound information of the second sensing information 54b. In a case where the sound of the listener is in an interrogative form and there is a change in the intonation of voice, the information processing unit 55b determines that the listener wants to ask a question to the speaker.

The information processing unit 55b executes language analysis by a sound analysis technology on the sound information of the second sensing information 54b. In a case where a predetermined word (thanks, great help, etc.) is included in the sound of the listener, the information processing unit 55b determines that the listener wants to convey a feeling of gratitude. The information processing unit 55b may perform image analysis on the image information of the second sensing information 54b, count the number of times of nodding, and determine that the listener wants to convey a feeling of gratitude in a case where the number of times of nodding is a predetermined number of times or more.

The information processing unit 55b may perform image analysis on the image information of the second sensing information 54b and determine the overall state of mind (whether or not the speaker is listening, the speaker has a question, or the speaker wants to convey a feeling of gratitude, and the like) from a facial expression (facial expression revealing their desire to talk), a gesture, and the like.

In a case where the listener is determined to be listening, to have a question, or to want to convey a gratitude as a result of the above determination, the information processing unit 55b determines that the listener is in the situation of "wanting to convey their non-verbal information to the speaker". In contrast, in a case where the situation of the listener does not apply to any of listening, having a question, or wanting to convey a feeling of gratitude, the information processing unit 55b determines that the listener is in the situation of "not wanting to convey their non-verbal information to the speaker".

### [1-6. Processing procedure of telepresence device according to embodiment]

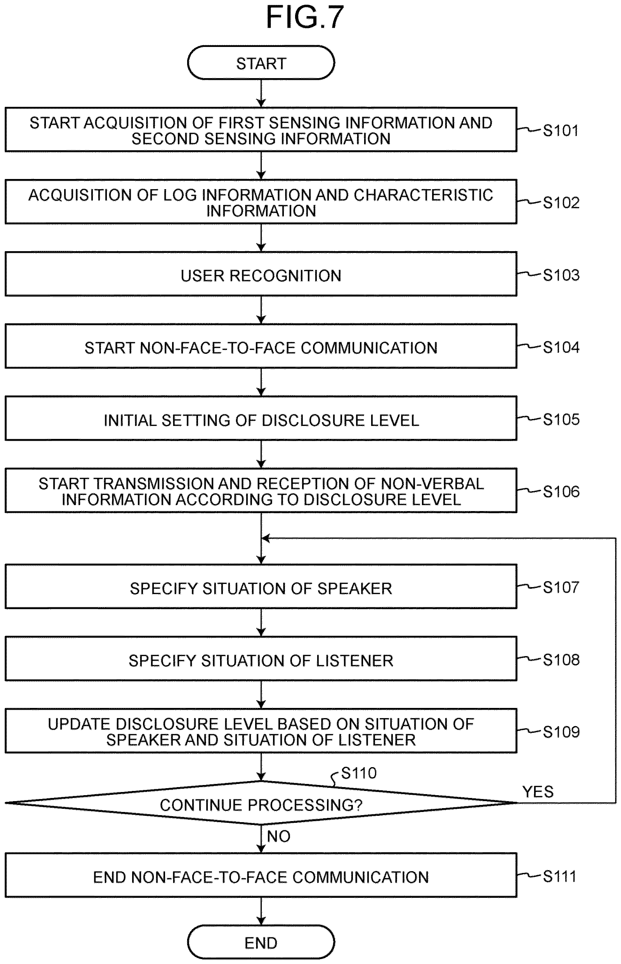

Next, an example of a processing procedure of the telepresence device 50 illustrated in FIG. 4 will be described. FIG. 7 is a flowchart illustrating a processing procedure of the telepresence device 50 according to the present embodiment. As illustrated in FIG. 7, the acquisition unit 55a of the telepresence device 50a starts acquisition of the first sensing information 54a from the input unit 52 and starts acquisition of the second sensing information 54b from the telepresence device 50b (Step S101) .

The acquisition unit 55a of the telepresence device 50 acquires the log information 54c and the characteristic information 54d from the server 100 (Step S102). The information processing unit 55b of the telepresence device 50 executes user recognition (Step S103). For example, in Step S103, the information processing unit 55b acquires information as to whether or not there is a target user at a point where non-face-to-face communication is to be performed using the telepresence system.

The telepresence device 50a starts non-face-to-face communication with the telepresence device 50b (Step S104). The information processing unit 55b sets the disclosure level to an initial value (Step S105). For example, the initial value of the disclosure level is set to the disclosure level "1", but may be appropriately changed.

The communication control unit 55c of the telepresence device 50a starts transmission and reception of non-verbal information according to the disclosure level with the telepresence device 50b (Step S106).

The information processing unit 55b specifies the situation of the speaker based on the first sensing information 54a (Step S107). The information processing unit 55b specifies the situation of the listener based on the second sensing information 54b (Step S108). The information processing unit 55b updates the disclosure level based on the situation of the speaker and the situation of the listener (Step S109).

When continuing the processing (Step S110, Yes), the telepresence device 50a moves to Step S107. In contrast, when not continuing the processing, the telepresence device 50a ends the non-face-to-face communication (Step S111).

### [1-7. Example of control of disclosure level of non-verbal information]

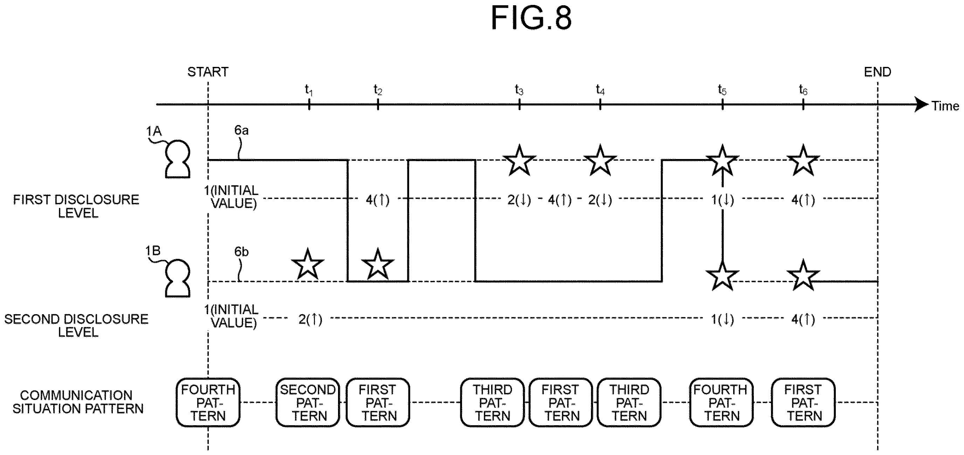

The following will describe an example of control of the disclosure level in a case where non-face-to-face communication is performed using the telepresence system according to the present embodiment. FIG. 8 is a diagram illustrating an example of control of the disclosure level. FIG. 8 illustrates a change in the disclosure level of the non-verbal information on a person 1A and a person 1B at different points when the person 1A and the person 1B perform non-face-to-face communication using the telepresence device 50.

The person 1A is defined as a speaker, the person 1B is defined as a listener, and the disclosure level of the non-verbal information transmitted from the person 1A to the person 1B is defined as a "first disclosure level". On the other hand, the person 1B is defined as a speaker, the person 1A is defined as a listener, and the disclosure level of the non-verbal information transmitted from the person 1B to the person 1A is defined as a "second disclosure level".

The horizontal axis in FIG. 8 is an axis corresponding to the time from the start to the end of communication. A line segment 6a indicates which person is the "speaker". The line segment 6b indicates which person is the "listener". In the example illustrated in FIG. 8, the person 1A is a speaker and the person 1B is a listener immediately after the start of communication, and then, the roles are switched several times during the communication.

It is assumed that the person 1A and the person 1B are old acquaintances and have prior knowledge of each other. In the description of FIG. 8, the initial values of the first disclosure level and the second disclosure level are set to level 1. It is assumed that the situation of the speaker and the situation of the listener during communication have changed as illustrated in FIG. 8 in a duration from time t₁ to t₆.

Time t₁ will be described. At time t₁, the person 1A is the speaker and the person 1B is the listener. At this time, in a case where the person 1B wants to ask a question about the speech of the person 1A, the situation of the listener changes to "the listener wants to convey their non-verbal information to the speaker". With this change, the communication situation illustrated in FIG. 5 changes from the fourth pattern to the second pattern, and the second disclosure level changes from level 1 to 2. Accordingly, the telepresence device 50b transmits non-verbal information based on the disclosure level 2 to the telepresence device 50a.

Time t₂ will be described. At time t₂, the person 1B is the speaker and the person 1A is the listener. At this time, in a case where the person 1B is not sure whether the person 1A is attentively listening to the own speech, the situation of the speaker changes to "the speaker wants to know non-verbal information of the listener". With this change, the communication situation illustrated in FIG. 5 changes from the second pattern to the first pattern, and the first disclosure level changes from level 1 to 4. Accordingly, the telepresence device 50a transmits non-verbal information based on the first disclosure level 4 to the telepresence device 50b.

Time t₃ will be described. At time t₃, the person 1B is the speaker and the person 1A is the listener. At this time, in a case where the person 1A temporarily leaves the place even though the person 1B is speaking, the listener is in the situation of "not wanting to convey their non-verbal information to the speaker (partner)". With this change, the communication situation illustrated in FIG. 5 is converted to the third pattern, and the first disclosure level changes from level 4 to 2. Accordingly, the telepresence device 50a transmits non-verbal information based on the first disclosure level 2 to the telepresence device 50b.

Time t₄ will be described. At time t₄, the person 1B is the speaker and the person 1A is the listener. At this time, it is assumed that the person 1A wants to take a break or take something to eat or drink even though the person 1B is speaking. In this case, the listener is in the situation of "not wanting to convey their non-verbal information to the speaker (partner)". Note that the person 1A does not want to let the person 1B see the person 1A's state of stretching or eating (or drinking), but the conversation by sound can be continued. With this change, the communication situation illustrated in FIG. 5 is converted to the third pattern, and the first disclosure level changes from level 4 to 2. Note that it is assumed that the first disclosure level has been updated to 4 in a duration from time t₃ and time t₄.

Time t₅ will be described. At time t₅, the person 1A and the person 1B desire to take a break or decide to stop talking to each other to perform work coordinates. At this time, the situations of the persons 1A and 1B are "the speaker does not want to know the non-verbal state of the listener" and "the listener does not want to convey their non-verbal information to the speaker". With this change, the communication situation illustrated in FIG. 5 is converted to the fourth pattern, and the first and second disclosure levels change to level 1. The telepresence device 50a transmits non-verbal information based on the first disclosure level 1 to the telepresence device 50b. The telepresence device 50b transmits non-verbal information based on the second disclosure level 1 to the telepresence device 50a.

Time t₆ will be described. Time t₆ is a time at which the person 1A and the person 1B have built an understanding on each other and corresponds to a timing to perform final confirmation or re-cap in the situation where the time is about to expire. In order to check the comprehension level of the speech, the both are in a situation of needing non-verbal information of the partner. At this time, the situations of the persons 1A and 1B are "the speaker wants to know the non-verbal state of the listener" and "the listener wants to convey their non-verbal information to the speaker". With this change, the communication situation illustrated in FIG. 5 is converted to the first pattern, and the first and second disclosure levels change from level 1 to 4. The telepresence device 50a transmits non-verbal information based on the first disclosure level 4 to the telepresence device 50b. The telepresence device 50b transmits non-verbal information based on the second disclosure level 4 to the telepresence device 50a.

### [1-8. Effects of embodiments]

As described above, while a first user and a second user are having a conversation online, the telepresence device 50 according to the present embodiment acquires the first sensing information of the first user acquired using a sensing device and the second sensing information of the second user acquired using a sensing device. The telepresence device 50 specifies a disclosure level of information to be transmitted and received between the first user and the second user based on the situation of the first user and the situation of the second user corresponding to the first sensing information and the second sensing information, respectively. This makes it possible to specify the disclosure level of non-verbal information regarding the vision, the sound, and the operation from the standpoint of the listener and the speaker.

Based on the disclosure level, the telepresence device 50 controls the type and amount of information to be transmitted and received between the first user and the second user. With this configuration, non-verbal information can be transmitted and received in accordance with the type and amount of information according to the standpoint of the listener and the speaker. For example, it is possible to obtain effects such as achieving comfortable communication according to intentions, avoiding discomfort on each of the speaker and the listener sides, having no need to perform or no feeling anxious about interruption of communication in the middle, reducing stress during non-face-to-face communication, contributing to effective use of time during non-face-to-face communication, and improving the degree of understanding details of the non-face-to-face communication.

The telepresence device 50 acquires first sensing information and second sensing information acquired using at least one sensing device among a microphone, a camera, and a sensor. This makes it possible to acquire information for specifying the disclosure level.

The telepresence device 50 determines whether the first user wants to know the information of the second user as the situation of the first user based on the first sensing information and the second sensing information, and determines whether the second user wants to convey the information of the first user as the situation of the second user based on the first sensing information and the second sensing information. This makes it possible to determine the situation of the speaker and the situation of the listener for specifying the disclosure level.

The telepresence device 50 specifies the communication details between the first user and the second user based on the first sensing information and the second sensing information, and determines the situation of the first user based on the communication details. This makes it possible to specify the situation of the first user (speaker) according to the communication details.

The telepresence device 50 specifies an external environment of the second user based on the second sensing information, and determines the situation of the first user based on the external environment. This makes it possible to specify the situation of the first user (speaker) according to the change in the external environment of the second user (listener).

The telepresence device 50 specifies whether or not the second sensing information includes information that can confirm an unpleasant situation with respect to the first user, and determines the situation of the first user based on a result of the specification. This makes it possible to specify the situation of the first user (speaker) according to the state of the second user (listener).

The telepresence device 50 specifies an external environmental factor of the second user based on the second sensing information, and determines the situation of the second user based on the specified external environmental factor. This makes it possible to specify the situation of the second user (listener) according to an external environmental factor (delivery service, rain, telephone calls) of the second user (listener) or the like.

The telepresence device 50 specifies the appearance or the health condition of the second user based on the second sensing information, and determines the situation of the second user based on the specified appearance or health condition of the second user. This makes it possible to specify the situation of the second user (listener) according to the internal state of the second user (listener).

The telepresence device 50 specifies the behavioral state of the second user based on the second sensing information, and determines the situation of the user based on the specified behavioral state. This makes it possible to specify the situation of the second user (listener) according to the behavioral state of the second user (listener).

The telepresence device 50 specifies an emotional expression of the second user based on the second sensing information, and determines a situation of the user based on the specified emotional expression. This makes it possible to specify the situation of the second user (listener) according to the emotional expression of the second user (listener).

### [2. Other embodiments]

The processing of the telepresence devices 50a and 50b and the server 100 included in the telepresence system described in the above embodiment is merely examples, and other processing may be executed.

In the telepresence system of the present embodiment described above, the information processing unit 55b of the telepresence device 50 specifies the disclosure level of the non-verbal information based on the first sensing information 54a and the second sensing information 54b, but the configuration is not limited thereto. For example, the server 100 may acquire the first sensing information 54a and the second sensing information 54b from the telepresence devices 50a and 50b and specify the disclosure level. In this case, the server 100 notifies the telepresence devices 50a and 50b of the specified disclosure level, and controls to execute data communication of the non-verbal information according to the disclosure level.

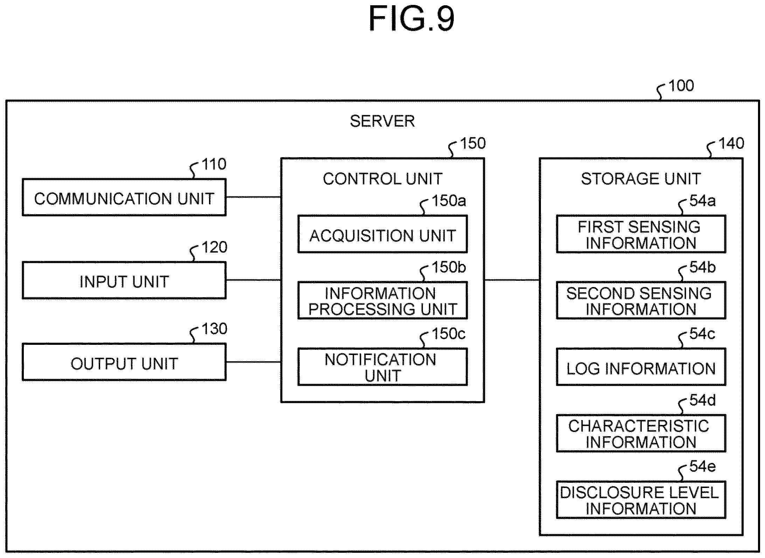

Here, a configuration of the server 100 that specifies the disclosure level will be described. FIG. 9 is a diagram illustrating a configuration example of the server 100. As illustrated in FIG. 9, the server 100 includes a communication unit 110, an input unit 120, an output unit 130, a storage unit 140, and a control unit 150.

The communication unit 110 is implemented by a NIC, for example. The communication unit 110 is connected to the network 5 in a wired or wireless channel, and transmits and receives information to and from the server 100 and the telepresence device 50 via the network 5.

The input unit 120 corresponds to an input device such as a keyboard and a mouse.

The output unit 130 corresponds to a display device such as a display.

The storage unit 140 is implemented by a semiconductor memory element such as RAM or flash memory, or a storage device such as a hard disk or an optical disk, for example. The storage unit 140 includes first sensing information 54a, second sensing information 54b, log information 54c, characteristic information 54d, and disclosure level information 54e.

Since the description regarding the first sensing information 54a, the second sensing information 54b, the log information 54c, the characteristic information 54d, and the disclosure level information 54e is similar to the above description, the same reference numerals are given, and the description will be omitted.

The control unit 150 is implemented by execution of a program stored in the telepresence device 50 by the CPU, MPU, or the like, with RAM or the like used as a work area, for example. Note that the control unit 150 may be actualized by an integrated circuit such as an ASIC or an FPGA. The control unit 150 includes an acquisition unit 150a, an information processing unit 150b, and a notification unit 150c.

The acquisition unit 150a acquires the first sensing information 54a from the telepresence device 50a and registers the acquired first sensing information in the storage unit 140. The acquisition unit 150a acquires the second sensing information 54b from the telepresence device 50b and registers the acquired second sensing information in the storage unit 140.

The acquisition unit 150a acquires information transmitted and received during communication executed between the telepresence devices 50 as the log information 54c, and registers the acquired log information in the storage unit 140. The acquisition unit 150a acquires, as the characteristic information 54d, information input from the input unit 120 or the like, such as the name, gender, age, and personal relationship of the user, and registers the acquired information in the storage unit 140.

The information processing unit 150b specifies a disclosure level in a case where non-verbal information is to be notified from the "speaker" to the "listener" based on the first sensing information 54a, the second sensing information 54b, the log information 54c, and the characteristic information 54d. The information processing unit 150b registers the information of the specified disclosure level in the storage unit 140 as the disclosure level information 54e. Other processing related to the information processing unit 150b is similar to the processing of the information processing unit 55b described above.

The notification unit 150c notifies the telepresence device 50 of the disclosure level information 54e registered by the information processing unit 150b.

As described above, the server 100 acquires the first sensing information 54a and the second sensing information 54b from the telepresence devices 50a and 50b, specifies the disclosure level, and notifies the telepresence devices 50a and 50b of information of the specified disclosure level. This makes it possible to execute data communication of the non-verbal information according to the disclosure level between the telepresence devices 50.

### [3. Hardware configuration]

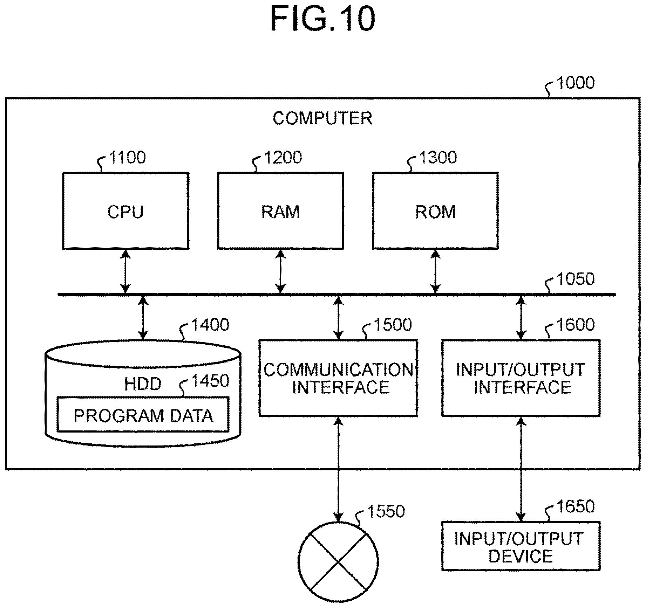

The information devices such as the telepresence device 50 and the cloud server 100 according to the above-described embodiments are implemented by a computer 1000 having a configuration as illustrated in FIG. 10, for example. FIG. 10 is a hardware configuration diagram illustrating an example of a computer that implements functions of the telepresence device 50 and the server 100. Hereinafter, the configuration will be described using an example of the telepresence device 50 according to the embodiment. The computer 1000 includes a CPU 1100, RAM 1200, read only memory (ROM) 1300, a hard disk drive (HDD) 1400, a communication interface 1500, and an input/output interface 1600. Individual components of the computer 1000 are interconnected by a bus 1050.

The CPU 1100 operates based on a program stored in the ROM 1300 or the HDD1400 so as to control each of components. For example, the CPU 1100 develops the program stored in the ROM 1300 or the HDD1400 into the RAM 1200 and executes processing corresponding to various programs.

The ROM 1300 stores a boot program such as a basic input output system (BIOS) executed by the CPU 1100 when the computer 1000 starts up, a program dependent on hardware of the computer 1000, or the like.

The HDD1400 is a non-transitory computer-readable recording medium that records a program executed by the CPU 1100, data used by the program, or the like. Specifically, the HDD1400 is a recording medium that records an information processing program according to the present disclosure, which is an example of program data 1450.

The communication interface 1500 is an interface for connecting the computer 1000 to an external network 1550 (for example, the Internet). For example, the CPU 1100 receives data from other devices or transmits data generated by the CPU 1100 to other devices via the communication interface 1500.

The input/output interface 1600 is an interface for connecting between an input/output device 1650 and the computer 1000. For example, the CPU 1100 receives data from an input device such as a keyboard or a mouse via the input/output interface 1600. In addition, the CPU 1100 transmits data to an output device such as a display, a loudspeaker, or a printer via the input/output interface 1600. Furthermore, the input/output interface 1600 may function as a media interface for reading a program or the like recorded on predetermined recording media. Examples of the media include optical recording media such as a digital versatile disc (DVD) or a phase change rewritable disk (PD), a magneto-optical recording medium such as a magneto-optical disk (MO), a tape medium, a magnetic recording medium, and semiconductor memory.

For example, when the computer 1000 functions as the telepresence device 50 according to the embodiment, the CPU 1100 of the computer 1000 executes the program loaded on the RAM 1200 so as to implement the functions of the control unit 55 and the like. In addition, the HDD 1400 stores a program according to the present disclosure and data in the storage unit 54. While the CPU 1100 executes program data 1450 read from the HDD1400, the CPU 1100 may acquire these programs from another device via the external network 1550, as another example.

Note that the functions of the server 100 can also be implemented by the computer 1000 described with reference to FIG. 10. For example, the CPU 1100 of the computer corresponding to the server 100 executes the program loaded on the RAM 1200, thereby implementing the functions of the control unit 150 and the like. Furthermore, the HDD 1400 stores the information processing program according to the present disclosure or data in the storage unit 140. While the CPU 1100 executes program data 1450 read from the HDD1400, the CPU 1100 may acquire these programs from another device via the external network 1550, as another example.

### [4. Conclusion]

An information processing device includes: an acquisition unit that acquires first sensing information of a first user acquired by using a sensing device and second sensing information of a second user acquired by using a sensing device while the first user and the second user are performing conversation online; and an information processing unit that specifies a disclosure level of information to be transmitted and received between the first user and the second user based on a situation of the first user and a situation of the second user corresponding to the first sensing information and the second sensing information, respectively. This makes it possible to specify the disclosure level of non-verbal information regarding the vision, the sound, and the operation from the standpoint of the listener and the speaker.

The information processing device further includes a communication control unit that controls the type and amount of information to be transmitted and received between the first user and the second user based on the disclosure level. With this configuration, non-verbal information can be transmitted and received in accordance with the type and amount of information according to the standpoint of the listener and the speaker.

The information processing device acquires the first sensing information and the second sensing information acquired using at least one sensing device among a microphone, a camera, and a sensor. This makes it possible to acquire information for specifying the disclosure level.

The first user is a user being a speaker who speaks to the second user, the second user is a user being a listener who listens to a speech from the first user, and the information processing device further executes processing of determining whether the first user wants to know information of the second user as a situation of the first user based on the first sensing information and the second sensing information, and processing of determining whether the second user wants to transmit information of the first user as a situation of the second user based on the first sensing information and the second sensing information. This makes it possible to determine the situation of the speaker and the situation of the listener for specifying the disclosure level.

The information processing device specifies communication details between the first user and the second user based on the first sensing information and the second sensing information, and determines the situation of the first user based on the specified communication details. This makes it possible to specify the situation of the first user (speaker) according to the communication details.

In the information processing device, the information processing unit specifies an external environment of the second user based on the second sensing information, and determines the situation of the first user based on the specified external environment. This makes it possible to specify the situation of the first user (speaker) according to the change in the external environment of the second user (listener).

In the information processing device, the information processing unit specifies whether or not the second sensing information includes information that can confirm an unpleasant situation with respect to the first user, and determines the situation of the first user based on a result of the specification. This makes it possible to specify the situation of the first user (speaker) according to the state of the second user (listener).

The information processing device specifies an external environmental factor of the second user based on the second sensing information, and determines the situation of the second user based on the specified external environmental factor. This makes it possible to specify the situation of the second user (listener) according to an external environmental factor (delivery service, rain, telephone calls) of the second user (listener) or the like.

The information processing device specifies the appearance or the health condition of the second user based on the second sensing information, and determines the situation of the second user based on the specified appearance or health condition of the second user. This makes it possible to specify the situation of the second user (listener) according to the internal state of the second user (listener).

The information processing device specifies a behavioral state of the second user based on the second sensing information, and determines the situation of the second user based on the specified behavioral state. This makes it possible to specify the situation of the second user (listener) according to the behavioral state of the second user (listener).

The information processing device specifies an emotional expression of the second user based on the second sensing information, and determines the situation of the second user based on the specified emotional expression. This makes it possible to specify the situation of the second user (listener) according to the emotional expression of the second user (listener).

Note that the present technology can also have the following configurations.
(1) An information processing device comprising:
   an acquisition unit that acquires first sensing information of a first user acquired by using a sensing device and second sensing information of a second user acquired by using a sensing device while the first user and the second user are performing conversation online; and
   an information processing unit that specifies a disclosure level of information to be transmitted and received between the first user and the second user based on a situation of the first user and a situation of the second user corresponding to the first sensing information and the second sensing information, respectively.
(2) The information processing device according to (1), further comprising a communication control unit that controls a type and an amount of information to be transmitted and received between the first user and the second user based on the disclosure level.
(3) The information processing device according to (1) or (2), wherein the acquisition unit acquires the first sensing information and the second sensing information acquired using at least one sensing device among a microphone, a camera, and a sensor.
(4) The information processing device according to any one of (1) to (3), wherein the first user is a user being a speaker who speaks to the second user, the second user is a user being a listener who listens to a speech from the first user, and
   the information processing unit further executes processing of determining whether the first user wants to know information of the second user as a situation of the first user based on the first sensing information and the second sensing information, and processing of determining whether the second user wants to transmit information of the first user as a situation of the second user based on the first sensing information and the second sensing information.
(5) The information processing device according to any one of (1) to (4), wherein the information processing unit specifies communication details between the first user and the second user based on the first sensing information and the second sensing information, and determines the situation of the first user based on the specified communication details.
(6) The information processing device according to any one of (1) to (5), wherein the information processing unit specifies an external environment of the second user based on the second sensing information, and determines the situation of the first user based on the specified external environment.
(7) The information processing device according to any one of (1) to (6), wherein the information processing unit specifies whether or not the second sensing information includes information that can confirm an unpleasant situation with respect to the first user, and determines the situation of the first user based on a result of the specification.
(8) The information processing device according to any one of (1) to (7), wherein the information processing unit specifies an external environmental factor of the second user based on the second sensing information, and determines the situation of the second user based on the specified external environmental factor.
(9) The information processing device according to any one of (1) to (8), wherein the information processing unit specifies an appearance or a health condition of the second user based on the second sensing information, and determines the situation of the second user based on the specified appearance or health condition of the second user.
(10) The information processing device according to any one of (1) to (9), wherein the information processing unit specifies a behavioral state of the second user based on the second sensing information, and determines the situation of the second user based on the specified behavioral state.
(11) The information processing device according to any one of (1) to (10), wherein the information processing unit specifies an emotional expression of the second user based on the second sensing information, and determines the situation of the second user based on the specified emotional expression.
(12) An information processing method comprising:
   acquiring first sensing information of a first user acquired by using a sensing device and second sensing information of a second user acquired by using a sensing device while the first user and the second user are performing conversation online; and
   specifying a disclosure level of information to be transmitted and received between the first user and the second user based on a situation of the first user and a situation of the second user corresponding to the first sensing information and the second sensing information, respectively.
(13) An information processing program for causing a computer to function as units comprising:
   an acquisition unit that acquires first sensing information of a first user acquired by using a sensing device and second sensing information of a second user acquired by using a sensing device while the first user and the second user are performing conversation online; and
   an information processing unit that specifies a disclosure level of information to be transmitted and received between the first user and the second user based on a situation of the first user and a situation of the second user corresponding to the first sensing information and the second sensing information, respectively.

### Reference Signs List

- 5: NETWORK
- 50a, 50b: TELEPRESENCE DEVICE
- 51, 110: COMMUNICATION UNIT
- 52, 120: INPUT UNIT
- 52a: CAMERA
- 52b: MICROPHONE
- 52c: VARIOUS SENSORS
- 53, 130: OUTPUT UNIT
- 53a: DISPLAY
- 53b: LOUDSPEAKER
- 53c: ACTUATOR
- 54, 140: STORAGE UNIT
- 54a: FIRST SENSING INFORMATION
- 54b: SECOND SENSING INFORMATION
- 54c: LOG INFORMATION
- 54d: CHARACTERISTIC INFORMATION
- 54e: DISCLOSURE LEVEL INFORMATION
- 55, 150: CONTROL UNIT
- 55a, 150a: ACQUISITION UNIT
- 55b, 150b: INFORMATION PROCESSING UNIT
- 55c: COMMUNICATION CONTROL UNIT
- 100: SERVER
- 150c: NOTIFICATION UNIT

## Claims

1. An information processing device comprising:
an acquisition unit that acquires first sensing information of a first user acquired by using a sensing device and second sensing information of a second user acquired by using a sensing device while the first user and the second user are performing conversation online; and
an information processing unit that specifies a disclosure level of information to be transmitted and received between the first user and the second user based on a situation of the first user and a situation of the second user corresponding to the first sensing information and the second sensing information, respectively.

2. The information processing device according to claim 1, further comprising a communication control unit that controls a type and an amount of information to be transmitted and received between the first user and the second user based on the disclosure level.

3. The information processing device according to claim 1, wherein the acquisition unit acquires the first sensing information and the second sensing information acquired using at least one sensing device among a microphone, a camera, and a sensor.

4. The information processing device according to claim 1, wherein the first user is a user being a speaker who speaks to the second user, the second user is a user being a listener who listens to a speech from the first user, and
the information processing unit further executes processing of determining whether the first user wants to know information of the second user as a situation of the first user based on the first sensing information and the second sensing information, and processing of determining whether the second user wants to transmit information of the first user as a situation of the second user based on the first sensing information and the second sensing information.

5. The information processing device according to claim 4, wherein the information processing unit specifies communication details between the first user and the second user based on the first sensing information and the second sensing information, and determines the situation of the first user based on the specified communication details.

6. The information processing device according to claim 4, wherein the information processing unit specifies an external environment of the second user based on the second sensing information, and determines the situation of the first user based on the specified external environment.

7. The information processing device according to claim 4, wherein the information processing unit specifies whether or not the second sensing information includes information that can confirm an unpleasant situation with respect to the first user, and determines the situation of the first user based on a result of the specification.

8. The information processing device according to claim 4, wherein the information processing unit specifies an external environmental factor of the second user based on the second sensing information, and determines the situation of the second user based on the specified external environmental factor.

9. The information processing device according to claim 4, wherein the information processing unit specifies an appearance or a health condition of the second user based on the second sensing information, and determines the situation of the second user based on the specified appearance or health condition of the second user.

10. The information processing device according to claim 3, wherein the information processing unit specifies a behavioral state of the second user based on the second sensing information, and determines the situation of the second user based on the specified behavioral state.

11. The information processing device according to claim 3, wherein the information processing unit specifies an emotional expression of the second user based on the second sensing information, and determines the situation of the second user based on the specified emotional expression.

12. An information processing method comprising:
acquiring first sensing information of a first user acquired by using a sensing device and second sensing information of a second user acquired by using a sensing device while the first user and the second user are performing conversation online; and
specifying a disclosure level of information to be transmitted and received between the first user and the second user based on a situation of the first user and a situation of the second user corresponding to the first sensing information and the second sensing information, respectively.

13. A computer-readable recording medium having an information processing program recorded therein, the information processing program causing a computer to function as units comprising:
an acquisition unit that acquires first sensing information of a first user acquired by using a sensing device and second sensing information of a second user acquired by using a sensing device while the first user and the second user are performing conversation online; and
an information processing unit that specifies a disclosure level of information to be transmitted and received between the first user and the second user based on a situation of the first user and a situation of the second user corresponding to the first sensing information and the second sensing information, respectively.
